# EUROPÄISCHE PATENTSCHRIFT

(11) **EP 3 069 930 B1**
(45) Veröffentlichungstag und Bekanntmachung des Hinweises auf die Patenterteilung: **05.04.2023**
(21) Anmeldenummer: 16154595.9
(22) Anmeldetag: 08.02.2016
(51) Int. Cl.: B60Q 1/068

(54) **VERSTELLSYSTEM IN EINEM KRAFTFAHRZEUGSCHEINWERFER**
ADJUSTING SYSTEM IN A VEHICLE HEADLAMP
SYSTEM D'AJUSTAGE

(30) Priorität: 18.03.2015 AT 502182015
(43) Veröffentlichungstag der Anmeldung: 21.09.2016
(73) Patentinhaber: ZKW Group GmbH, 3250 Wieselburg (AT)
(72) Erfinder: Hauer, Clemens, 3261 Steinakirchen am Forst (AT); Stadler, Peter, 3654 Raxendorf (AT)
(74) Vertreter: Patentanwaltskanzlei Matschnig & Forsthuber OG

(56) Entgegenhaltungen:
- EP-A1- 2 631 120
- EP-A1- 2 786 897
- EP-A2- 1 946 966
- DE-A1-102010 022 847
- US-A1- 2008 112 181
- US-A1- 2011 044 063
- US-B1- 6 474 850

## Beschreibung

Die Erfindung betrifft ein Verstellsystem für einen Kraftfahrzeugscheinwerfer, umfassend ein Gehäuse und eine Verstelleinrichtung zum Verstellen - beispielsweise zum Verschwenken - von zumindest einer optisch relevanten Baueinheit des

Kraftfahrzeugscheinwerfers innerhalb des Gehäuses des Scheinwerfers.

Verstellsysteme dieser Art sind wohlbekannt und dienen zum Einstellen der Position und/oder Ausrichtung optischer Komponenten von Scheinwerfern; beispielsweise kann die optisch relevante Baueinheit eine Leuchteinheit bzw. ein Lichtmodul ist oder zumindest eine Leuchteinheit oder ein Lichtmodul umfassen. Sie zeichnen sich durch Einfachheit des Einstellens auf, jedoch sind sie schwierig in der Montage, da insbesondere die Befestigungsstellen an dem Gehäuse schwer zugänglich sind, was die Fehleranfälligkeit während des Montagevorgangs erhöht.

In DE 10 2010 022 847 A1 der Anmelderin ist ein Verstellsystem zum Verstellen eines optisch relevanten Bauteils eines Fahrzeugscheinwerfers beschrieben, die dem Oberbegriff des Anspruchs 1 entspricht. Weitere Verstellvorrichtungen sind in US 2008/0112181 A1, sowie in den EP 2 786 897 A1 und EP 2 631120 A1 der Anmelderin gezeigt.

Es ist daher eine Aufgabe der Erfindung, ein Verstellsystem zu schaffen, die eine erleichterte und schnellere Montage der Verstelleinrichtung in ein Gehäuse eines Kraftfahrzeugscheinwerfers ermöglicht.

Diese Aufgabe wird von einem Verstellsystem für einem Kraftfahrzeugscheinwerfer, umfassend ein Gehäuse und eine Verstelleinrichtung, gemäß dem Anspruch 1 gelöst. Erfindungsgemäß ist die Lagerkomponente als von dem Gehäuse gesondertem Bauteil ausgebildet und an dem Gehäuse feststehend montiert, wobei das Stellelement in einem Haltebereich der Lagerkomponente um seine Längsachse verdrehbar gelagert ist und wobei das Stellelement einen mit einer Antriebseinrichtung getriebemäßig verbundenen Antriebsabschnitt und einen Schaftabschnitt mit einem Gewinde aufweist, der mit einem Gegengewinde des Gleitelements zusammenwirkt, wobei die Antriebseinrichtung im Gehäuse gelagert ist, beispielsweise in einer Öffnung im Gehäuse drehbar, und das Gleitelement einen Verbindungsbereich hat, an dem es gelenkig mit der optischen Baueinheit verbunden ist, und zudem die (von dem Gehäuse gesonderte) Lagerkomponente einen Führungsbereich umfasst, in dem das Gleitelement parallel zur Längsachse des Stellelements verschiebbar gelagert ist.

Diese Lösung schafft ein Gleitbahnlager in Form der oben beschriebenen Lagerkomponente, die einerseits eine Führung für das Gleitelement erbringt und andererseits das Stellelement in dem Gehäuse lagert und positioniert. Das ermöglicht Vereinfachungen bei der Montage der Verstelleinrichtung und verbesserte Justierungsmöglichkeiten, bei einer geringen Anzahl der einzelnen Komponenten, und in der Folge geringere Kosten der Herstellung, Montage und Nacharbeiten wie Justierung und Abstimmschleifen, sowie schnellerer und einfacherer Validierung. Zudem eignet sich die erfindungsgemäße Verstelleinrichtung zur Verwendung für mehrere Scheinwerfer- bzw. Gehäusetypen.

In einer besonders vorteilhaften Ausgestaltung der Erfindung ist das Stellelement außerhalb des Führungsbereiches angeordnet; hierbei kann das Gleitelement so gestaltet sein, dass lediglich zumindest ein Führungsteil des Gleitelements in dem Führungsbereich verschieblich gehalten ist.

Außerdem ist es günstig und verringert die Anzahl der Komponenten, wenn der Haltebereich und der Führungsbereich der Lagerkomponente miteinander einstückig ausgebildet sind.

Vorteilhafterweise kann der Antriebsabschnitt an einem Ende des Stellelements, das beispielsweise vorzugsweise als Einstellschraube ausgeführt ist, ausgebildet sein.

Gemäß einem weiteren Aspekt der Erfindung kann der Antriebsabschnitt ein Kegelzahnrad umfassen, wobei die Antriebseinrichtung als Einstellwelle mit einem Kegelritzel, das mit dem Kegelzahnrad zusammenwirkt, und einem aus dem Gehäuse herausgeführten Kopfteil ausgebildet ist. Hierbei kann der Kopfteil der Einstellwelle einen Ansatz für ein externes Werkzeug aufweist, wobei der Ansatz vorzugsweise als Tiefenanschlag für ein externes Werkzeug ausgebildet ist und mittig entlang der Längsachse der Einstellwelle in den Kopfteil hineinragt.

Es ist zudem ein besonderer Vorteil der Erfindung, dass die Verstelleinrichtung und insbesondere das Stellelement zur Gänze innerhalb des Gehäuses liegt. Dies verringert die Gefahr der Verschmutzung und Beschädigung. Erfindungsgemäß ist die Antriebseinrichtung im Gehäuse gelagert, beispielsweise in einer Öffnung im Gehäuse drehbar, und der Haltebereich eine (vorteilhaft innerhalb des Gehäuses befindliche) Einrastvorrichtung aufweist, an der die Antriebseinrichtung in ihrer Betriebsposition in Bezug auf das Stellelement eingerastet ist. Gemäß einem weiteren Aspekt der Erfindung erfolgt die Befestigung der Verstelleinrichtung ausschließlich über die Lagerkomponente, die durch in dem Haltebereich vorgesehene Öffnungen mittels Befestigungsbolzen oder -schrauben an dem Gehäuse befestigt ist.

Gemäß einem weiteren Aspekt der Erfindung kann das Gleitelement zwei Führungsteile aufweisen, die von dem Gegengewinde abstehend angeordnet sind, insbesondere jeweils unterhalb und oberhalb von dem Gegengewinde abstehend, und jedes dieser Führungsteile in einem korrespondierenden Teil des Führungsbereichs gehalten ist. Die Erfindung samt weiteren Einzelheiten und Vorzügen wird im Folgenden anhand eines in den beigefügten Zeichnungen dargestellten, nicht einschränkenden Ausführungsbeispiels näher erläutert. Die Zeichnungen zeigen:
- Fig. 1: eine Verstelleinrichtung eines Verstellsystems für einen KFZ-Scheinwerfer gemäß der Ausführungsform in einer perspektivischen Ansicht;
- Fig. 2: eine andere perspektivische Ansicht der Verstelleinrichtung;
- Fig. 3: eine Schnittansicht des Haltebereichs und der Antriebseinrichtung der Verstelleinrichtung;
- Fig. 4a und 4b: die Lagerschale der Verstelleinrichtung in je einer Ansicht auf die Außenseite und von innen; und
- Fig. 5: zeigt die Verstelleinrichtung in im Gehäuse montierter Lage.

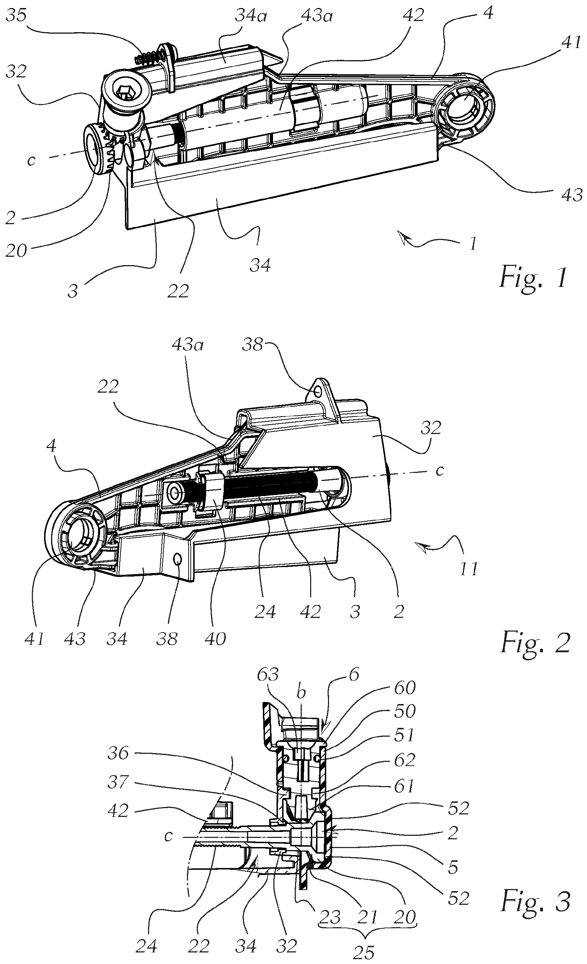

In der hier gegebenen Beschreibung beziehen sich Begriffe wie "rechts", "links", "oben" und "unten" auf eine Lage der erfindungsgemäßen Verstelleinrichtung, wenn diese in Blickrichtung entlang der Längsachse des Stellelements (insbesondere der Einstellschraube) betrachtet wird, wobei das Ende, das mit der Einstellwelle (insbesondere dem Antriebsritzel) zusammenwirkt, dem Betrachter zugewandt ist und die Einstellwelle nach oben orientiert ist; diese Begriffe sind jedoch nur konventionell und unabhängig von der tatsächlichen Einbaulage, die gegebenenfalls gänzlich anders sein kann. In diesem Sinne zeigt Fig. 1 eine Ansicht auf die rechte Seite der Verstelleinrichtung von schräg oben und Fig. 2 eine Ansicht auf die linke Seite.

Bezugnehmend auf Fig. 1 und 2 umfasst die Verstelleinrichtung 1 des Verstellsystems gemäß dem ersten Ausführungsbeispiel ein Stellelement in Form einer Einstellschraube 2, die dem Verstellen der Position eines in einer Lagerschale 3 verschiebbar gelagerten Gleitelements 4 der Verstelleinrichtung 1 eingerichtet ist. Die Lagerschale 3 stellt die Lagerkomponente der Erfindung dar; sie ist in das Gehäuse 5 des Scheinwerfers (Fig. 3) eingesetzt und darin feststehend montiert.

Die Einstellschraube 2 weist an einem Ende einen Kopf 20 mit einem Kegelzahnrad 21 auf, sowie einen Schaft 22 mit einem Außengewinde 24. Sie ist um ihre Längsachse c drehbar in einem Haltebereich 32 der Lagerschale 3 gelagert, beispielsweise in einem den Kopf 20 mit dem Schaft 22 verbindenden Halsbereich 23. Der Kopf 20 und der Halsbereich 23 bilden zusammen einen Antriebsabschnitt 25 der Einstellschraube 2; der Antriebsabschnitt 25 wirkt getriebemäßig mit einer Einstellwelle in Form eines Antriebsritzels 6 zusammen, durch das die Einstellschraube 2 betätigt werden kann.

In Fig. 3 ist das Antriebsritzel 6 in seiner Einbaulage im Gehäuse 5 erkennbar; Fig. 3 ist eine Schnittansicht entlang einer Schnittebene, die durch die Längsachsen b, c des Antriebsritzels 6 und der Einstellschraube 2 verläuft. Das Antriebsritzel 6 weist an seinem nach innen gerichteten Ende ein Kegelritzel (Kegelzahnrad) 61 auf, das mit dem Kegelzahnrad 21 der Einstellschraube zusammenwirkt und so die Einstellschraube betätigt. Das Antriebsritzel 6 ist in einer Öffnung 50 des Gehäuses eingesetzt und weist einen aus dem Gehäuse 5 herausgeführten Kopfteil 60 auf. Es ist in dieser Öffnung 50 drehbar gelagert und kann zudem durch einen O-Ring 51 zum Innenraum des Gehäuses 5 abgedichtet sein. In einem Schaftbereich des Antriebsritzels 6, beispielsweise gleich oberhalb des Kegelritzes 61, kann eine Nut 62 vorgesehen sein, die wie weiter unten beschrieben zum Halten des Kegelritzels 6 in seiner Position in Bezug auf die Lagerschale 3 dient. Das Kegelritzel 61 befindet sich somit innerhalb des Gehäuses, ebenso wie das Stellelement 2 vorzugsweise zur Gänze innerhalb des Gehäuses 5 liegt.

Der Kopfteil 60 kann beispielsweise so ausgestaltet sein, dass in diesen ein externes Werkzeug wie z.B. ein Sechskantwerkzeug eingesetzt werden kann; hierzu kann der Kopfteil beispielsweise einen Ansatz 63 in Form eines Tiefenanschlags für das externe Werkzeug aufweisen, der mittig entlang der Längsachse b der Einstellwelle 6 in den Kopfteil 60 hineinragt. In einer Variante kann der Kopfteil auch mit einem Motorantrieb verbindbar gestaltet sein, direkt oder getriebemäßig, z.B. mit einer Antriebsachse eines Elektromotors verbunden.

Wieder bezugnehmend auf Fig. 1 und 2 umfasst die Lagerschale 3 einen Haltebereich 32, der wie erwähnt für die Lagerung der Einstellschraube 2 ausgelegt ist, und (zumindest) einen Führungsbereich 34, in dem das Gleitelement 4 in einer Richtung parallel zur Längsachse c des Stellelements verschieblich gelagert ist. Bevorzugt ist der Haltebereich 32 mit dem (bzw. jedem) Führungsbereich 34 einstückig ausgebildet; überhaupt ist es günstig, wenn die gesamte Lagerschale 3 einstückig ausgebildet ist.

Das Gleitelement 4 weist einen Gewindebereich 42 auf, der als Gegengewinde mit dem Gewinde 22 der Einstellschraube zusammenwirkt, sodass eine Drehung der Einstellschraube in eine Längsbewegung des Gleitelements entlang der Längsachse c umgesetzt wird. Im gezeigten Ausführungsbeispiel enthält der Gewindebereich 42 ein offenes Innengewinde, wobei die Einstellschraube 2 durch eine Halteklammer 40 in Eingriffsposition des (Außen)Gewindes 22 mit dem Gewindebereich 42 gehalten wird. Das Gleitelement 4 weist zudem eine gelenkige Verbindung 41 mit einer optischen Baueinheit 10 auf, wodurch die Längsbewegung des Gleitelements 4 über die gelenkige Verbindung 41 in eine Verstellbewegung der Baueinheit 10 umgesetzt wird.

Das Gleitelement 4 weist zumindest einen Führungsteil 43 auf, der von dem Gewindebereich abstehend, beispielsweise unterhalb und/ oder oberhalb, angeordnet ist. In der gezeigten Ausführungsform sind zwei Führungsteile 43, 43a vorgesehen, jeweils unten bzw. oben an dem Gleitelement. Jedes dieser Führungsteile ist in einem korrespondierenden Teil des Führungsbereichs 34 der Lagerschale 3 gehalten. Hierbei ist es vorteilhaft, dass der Führungsbereich der Lagerschale 3 das Stellelement 2 nicht umgibt, dieses somit außerhalb des Führungsbereiches 34 angeordnet ist, sodass nur die Führungsteile 43, 43a in dem Führungsbereich 34 (bzw. in jeweils einem korrespondierenden Führungsbereich) verschieblich gehalten sind. Es kann auch nur ein Führungsteil vorgesehen sein, oder gegebenenfalls auch mehr als zwei Führungsteile des Gleitelements.

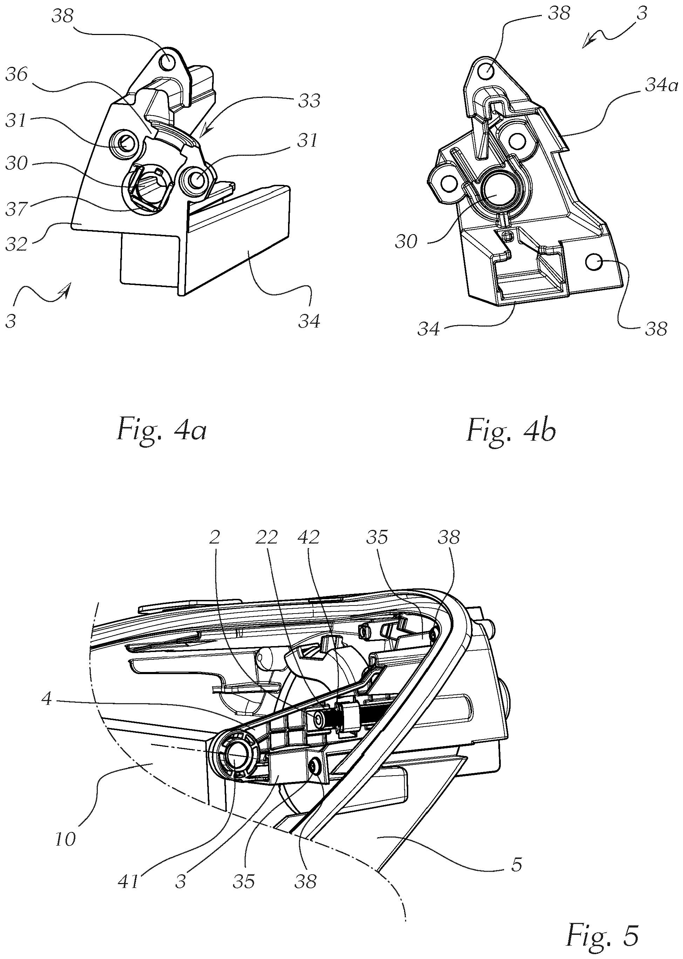

Die Fig. 4a und 4b zeigen die Lagerschale 3 (das ein von dem Gehäuse 5 gesondertes Bauteil darstellt) in einer Ansicht entlang bzw. entgegen der Achse c. Fig. 4a zeigt die nach außen gerichtete Seite der Lagerschale, genauer des Haltebereichs 32; diese Seite dient als Schnittstelle zum Befestigen am Gehäuse 5. Hierzu sind Ausnehmungen 31 und Befestigungslöcher 38 in dem Haltebereich 32 vorgesehen. In dem Haltebereich 32 ist außerdem die Öffnung 30 erkennbar, durch die die Einstellschraube 2 eingeführt und drehbar gehalten ist.

Wie in Fig. 3 und 4a ersichtlich ist, kann der Führungsbereich 32 vorteilhafter Weise einen Bereich 33 in Form einer offenen Hülse aufweisen, der einen Bereich des Antriebsritzels 6, hier z.B. des Kegelritzels 61, teilweise umgibt. Der Bereich 33 weist günstiger Weise einen Vorsprung 36 auf, z.B. in Form einer Nase oder ringartig teilweise umlaufenden Leiste; dies dient als Einrastvorrichtung, die in die oben erwähnte Nut 62 einrasten kann. Durch diese Rastverriegelung wird das Antriebsritzel in einer definierten Betriebsposition in Bezug auf die Lagerschale und insbesondere das Kegelzahnrad 21 der Einstellschraube 2 gehalten. In einer Variante könnte anstelle der Nut auch ein ring- oder ringsektorartiger Vorsprung vorgesehen sein, der in eine korrespondierende Vertiefung des Führungsbereichs einrastet.

In Fig. 3 und 4b ist zudem erkennbar, dass die Öffnung 30 nach außen hin einen Anschlag 37 ausbildet, z.B. in Form einer oder mehrerer Leisten, wodurch ein Anschlag für den Halsbereich 23 der Einstellschraube 2 gebildet ist. Dadurch ist deren Bewegung vorwärts entlang der Längsachse c begrenzt; in der Gegenrichtung liegt der Kopf 20 an Anschlagstegen 52 im Gehäuse 5 an, sodass die Bewegung rückwärts ebenfalls begrenzt ist. Das Gehäuse 5 umgibt zudem den Kopf 20 zumindest teilweise entlang des Umfangs und bildet so eine zusätzliche Führung der Einstellschraube 2 außerhalb der eigentlichen Baugruppe 11 der erfindungsgemäßen Verstelleinrichtung. Falls gewünscht kann um die Öffnung 30 und den Anschlagsrand 37 eine geschwächter oder durchbrochener Bereich (nicht gezeigt) vorgesehen sein, der ein federndes Nachgeben des Anschlagsrand 37 ermöglicht, um eine Toleranz zum Ausgleich gegenüber dem Gehäuse zu gestatten.

Die Lagerschale 3 bildet somit ein Gleitbahnlager, das einerseits die Führung für das Gleitelement 4 darstellt und andererseits die Einstellschraube 2 hinsichtlich des Gehäuses 5 und/ oder des Kegelritzels 61 der Antriebswelle positioniert. Die Lagerschale bildet mit der Einstellschraube und dem Gleitelement eine Baugruppe 11 (Fig. 2), die - noch ohne das Antriebsritzel 6 - vormontiert und als Ganzes in ein Gehäuse 5 eines Scheinwerfers eingesetzt werden kann.

Zur Montage der Baugruppe 11 wird zuerst das Gleitelement 4 in den Führungsbereich 34 eingeführt, sodann wird die Einstellschraube 2 mit dem Schaft 22 voran durch die Öffnung 30 geführt und in das Innengewinde 42 des Gleiteinrichtung 4 eingelegt und die Halteklammer 40 aufgebracht; auf diese Weise wird die Einstellschraube 2 in ihrer um ihre Längsachse c drehbarer Arbeitsposition eingerastet.

Sodann wird die Baugruppe 11 eingesetzt, wobei die Ausnehmungen 31 im Haltebereich 32 auf korrespondierende Vorsprünge oder Zapfen (nicht gezeigt) im Gehäuse 5 des Scheinwerfers gesetzt werden und diese somit eine korrekte Positionierung bewirken. Die Lagebeziehung zwischen dem Gehäuse 5 und der Baugruppe 11 erfolgt ausschließlich über die in Fig. 4a ersichtlich nach außen (d.h. zum Gehäuse) gewandte Fläche der Lagerschale 3, vorzugsweise über eine formschlüssige Verbindung, die geringstmögliche Toleranz zulässt.

Nach dem Einsetzen dieser Baugruppe in das Gehäuse wird das Antriebsritzel 6 eingesetzt. Hierbei kann gegebenenfalls die Baugruppe 11 in der Richtung, die der Längsachse c entspricht, geringfügig bewegt werden und/oder die Einstellschraube 2 vorübergehend aus der Öffnung 30 herausgerückt werden, um das Einführen des Antriebsritzel 6 bis in dessen Endposition zu ermöglichen. Schließlich wird durch die Einrastvorrichtung, die aus dem Vorsprung 36 des Führungsbereichs 32 und der Nut 62 des Antriebsritzels 6 gebildet wird, eine wohldefinierte Lagebeziehung der Baugruppe zum Gehäuse 5 und dem Antriebsritzel 6 erzielt, einschließlich des Herstellens der getriebemäßigen Verbindung zwischen Einstellschraube 2 und Antriebsritzel 6. Nach dem Einsetzen des Antriebsritzels 6 kann schließlich die Lagerschale 3 wie in Fig. 5 gezeigt in dem Gehäuse 5 fixiert werden, beispielsweise unter Verwendung der Befestigungslöcher 38 mittels Befestigungsschrauben 35 oder anderer geeigneten Befestigungsmittel. Hierbei befinden sich, wie in Fig. 5 erkennbar, die Befestigungslöcher 38 an leicht zugänglichen Stellen im Gehäuse 5.

Wie aus dem Obigen hervorgeht, gestattet die Erfindung Vereinfachungen bei der Montage der Verstelleinrichtung und verbesserte Justierungsmöglichkeiten, bei einer geringen Anzahl der einzelnen Komponenten. Dies führt zu geringeren Kosten der Herstellung, Montage und Nacharbeiten wie Justierung und Abstimmschleifen, sowie schnellerer und einfacherer Validierung. Zudem kann diese Baugruppe in derselben Ausführung für mehrere Scheinwerfertypen bzw. Gehäusetypen verwendet werden.

Falls gewünscht, kann die Lagerschale bzw. die Lagerkomponente im Sinne der Erfindung auch zusätzliche Funktionen übernehmen, wie z.B. als Befestigung für andere Komponenten des Scheinwerfers.

Die Erfindung erbringt als weiteren Vorteil, dass sie ermöglicht, dass sämtliche getriebeartigen Kopplungen (insbesondere die Verzahnung Kegelritzel-Einstellschraube sowie die Gewindeverbindung zwischen Einstellschraube und Gleitelement) innerhalb des Gehäuses befinden. Die Länge des Einstellritzels kann im Gehäusewerkzeug auf einfache Weise variiert werden.

Es versteht sich, dass die hier offenbarten Ausführungsformen nur zur Erläuterung der Erfindung vorgestellt sind und nicht für die Erfindung einschränkend auszulegen sind. Die Erfindung wird nur durch die beigelegte Ansprüche limitiert. Der Fachmann kann hierzu vielerlei Abwandlungen und Ausgestaltungen vornehmen. So kann die erfindungsgemäße Verstelleinrichtung auch für das Einstellen anderer optisch relevanten Komponenten eines Scheinwerfers verwendet werden.

## Patentansprüche

1. Verstellsystem für einen Kraftfahrzeugscheinwerfer, umfassend ein Gehäuse und eine Verstelleinrichtung (1) zum Verstellen, beispielsweise zum Verschwenken, von zumindest einer optisch relevanten Baueinheit (10) des Kraftfahrzeugscheinwerfers innerhalb des Gehäuses (5) des Scheinwerfers, welche optisch relevante Baueinheit (10) beispielsweise eine Leuchteinheit bzw. ein Lichtmodul ist oder zumindest eine Leuchteinheit oder ein Lichtmodul umfasst, und wobei die Verstelleinrichtung (1) ein Stellelement (2), eine Lagerkomponente (3) und ein Gleitelement (4) umfasst,
wobei die Lagerkomponente (3) als von dem Gehäuse (5) gesondertem Bauteil ausgebildet und an dem Gehäuse (5) feststehend montiert ist,
wobei das Stellelement (2) in einem Haltebereich (32) der Lagerkomponente (3) um seine Längsachse (c) verdrehbar gelagert ist und wobei das Stellelement (2) einen mit einer Antriebseinrichtung (6) getriebemäßig verbundenen Antriebsabschnitt (25) und einen Schaftabschnitt (22) mit einem Gewinde (24) aufweist, der mit einem Gegengewinde (42) des Gleitelements (4) zusammenwirkt,
wobei das Gleitelement (4) an einem Verbindungsbereich (41) gelenkig mit der optischen Baueinheit (10) verbindbar ist,
wobei die von dem Gehäuse (5) gesonderte Lagerkomponente (3) einen Führungsbereich (34) umfasst, in dem das Gleitelement (4) parallel zur Längsachse (c) des Stellelements verschiebbar gelagert ist,
**dadurch gekennzeichnet, dass**
die Antriebseinrichtung (6) im Gehäuse (5) gelagert ist, beispielsweise in einer Öffnung (50) im Gehäuse drehbar, und der Haltebereich (32) eine Einrastvorrichtung (36) aufweist, an der die Antriebseinrichtung (6) in ihrer Betriebsposition in Bezug auf das Stellelement (2) eingerastet ist.

2. Verstellsystem nach Anspruch 1, **dadurch gekennzeichnet, dass** das Stellelement (2) außerhalb des Führungsbereiches (34) angeordnet ist und dass bevorzugt nur zumindest ein Führungsteil (43) des Gleitelements (4) in dem Führungsbereich (34) verschieblich gehalten ist.

3. Verstellsystem nach Anspruch 1 oder 2, **dadurch gekennzeichnet, dass** der Haltebereich (32) und der Führungsbereich (34) der Lagerkomponente (3) miteinander einstückig ausgebildet sind.

4. Verstellsystem nach einem der vorhergehenden Ansprüche, **dadurch gekennzeichnet, dass** der Antriebsabschnitt (25) an einem Ende des vorzugsweise als Einstellschraube ausgebildeten Stellelements (2) ausgebildet ist.

5. Verstellsystem nach einem der vorhergehenden Ansprüche, **dadurch gekennzeichnet, dass** der Antriebsabschnitt (25) ein Kegelzahnrad (21) umfasst, wobei die Antriebseinrichtung (6) als Einstellwelle mit einem Kegelritzel (61), das mit dem Kegelzahnrad (21) zusammenwirkt, und einem aus dem Gehäuse (5) herausgeführten Kopfteil (60) ausgebildet ist.

6. Verstellsystem nach Anspruch 5, **dadurch gekennzeichnet, dass** der Kopfteil (60) der Einstellwelle einen Ansatz (63) für ein externes Werkzeug aufweist, wobei der Ansatz (63) vorzugsweise als Tiefenanschlag für ein externes Werkzeug ausgebildet ist und mittig entlang der Längsachse (b) der Einstellwelle (6) in den Kopfteil (60) hineinragt.

7. Verstellsystem nach einem der vorhergehenden Ansprüche, **dadurch gekennzeichnet, dass** die Verstelleinrichtung und insbesondere das Stellelement (2) zur Gänze innerhalb des Gehäuses (5) liegt.

8. Verstellsystem nach einem der vorhergehenden Ansprüche, **dadurch gekennzeichnet, dass** die Lagerkomponente (3) durch in dem Haltebereich (32) vorgesehene Öffnungen (38) mittels Befestigungsbolzen oder -schrauben (35) an dem Gehäuse (5) befestigbar ist.

9. Verstellsystem nach einem der vorhergehenden Ansprüche, **dadurch gekennzeichnet, dass** das Gleitelement (4) zwei Führungsteile (43, 43a) aufweist, die von dem Gegengewinde (42) abstehend angeordnet sind, und jedes dieser Führungsteile in einem korrespondierenden Teil des Führungsbereichs (34) gehalten ist.

10. Verstellsystem nach Anspruch 9, **dadurch gekennzeichnet, dass** die Führungsteile (43, 43a) jeweils unterhalb und oberhalb von dem Gegengewinde (42) abstehend angeordnet sind.

## Claims

1. Adjustment system for a motor vehicle headlamp, comprising a housing and an adjustment device (1) for adjusting, for example for pivoting, at least one optically relevant component (10) of the motor vehicle headlamp within the housing (5) of the headlamp, which optically relevant component (10) is, for example, a light unit or a light module or comprises at least one light unit or light module, and wherein the adjustment device (1) comprises an adjusting element (2), a bearing component (3) and a sliding element (4).
wherein the bearing component (3) is realized as a component separate from the housing (5) and is fixedly mounted to the housing (5),
wherein the adjusting element (2) is mounted rotatable about its longitudinal axis (c) in a support region (32) of the bearing component (3) and wherein the adjusting element (2) has an actuation portion (25), which is connected by gear to a actuation device (6), and a shank portion (22) including a thread (24) and cooperating with a counter-thread (42) of the sliding element (4), wherein the sliding element (4) is articulable to the optical unit (10) at a connecting region (41), wherein the bearing component (3), which is separate from the housing (5), comprises a guide region (34) in which the sliding element (4) is located displaceable parallel to the longitudinal axis (c) of the actuating element,
**characterised in that**
the actuation device (6) is mounted in the housing (5), for example rotatable in an opening (50) in the housing, and the support region (32) comprises a latching device (36) to which the actuation device (6) is, in its operating position, latched in relation to the actuating element (2).

2. Adjustment system according to claim 1, **characterised in that** the adjusting element (2) is arranged outside the guide region (34) and that preferably only at least one guide part (43) of the sliding element (4) is held displaceable in the guide region (34).

3. Adjustment system according to claim 1 or 2, **characterised in that** the support region (32) and the guide region (34) of the bearing component (3) are realized integral.

4. Adjustment system according to any one of the preceding claims, **characterised in that** the actuation section (25) is realized at one end of the adjusting element (2), which is preferably realized as adjusting screw.

5. Adjustment system according to any one of the preceding claims, **characterized in that** the actuation section (25) comprises a bevel gear (21), the actuation device (6) being designed as an adjustment shaft including a bevel pinion (61) interacting with the bevel gear (21) and a head part (60) protruding from the housing (5).

6. Adjustment system according to claim 5, **characterised in that** the head part (60) of the adjustment shaft has an access portion (63) for an external tool, the access portion (63) preferably being realized as a depth stop for an external tool and projecting centrally into the head part (60) along the longitudinal axis (b) of the adjustment shaft (6).

7. Adjustment system according to any one of the preceding claims, **characterised in that** the adjustment device and in particular the adjusting element (2) is located entirely within the housing (5).

8. Adjustment system according to any one of the preceding claims, **characterised in that** the bearing component (3) is attachable to the housing (5) by means of fastening bolts or screws (35) through openings (38) provided in the support region (32).

9. Adjustment system according to any one of the preceding claims, **characterised in that** the sliding element (4) comprises two guide parts (43, 43a), arranged projecting from the counter-thread (42), and each of these guide parts is held in a corresponding part of the guide region (34).

10. Adjustment system according to claim 9, **characterised in that** the guide parts (43, 43a) are arranged projecting below and above the counter-thread (42), respectively.

## Revendications

1. Système de réglage pour un projecteur de véhicule automobile, comportant un boîtier et un dispositif de réglage (1) pour le réglage, par exemple pour le pivotement, d'au moins une unité (10) de construction optiquement importante du projecteur de véhicule automobile située à l'intérieur du boîtier (5) du projecteur, laquelle unité (10) de construction optiquement importante est par exemple une unité d'éclairage ou un module d'éclairage ou comprend au moins une unité d'éclairage ou un module d'éclairage, et le dispositif de réglage (1) comportant un élément de réglage (2), un composant de palier (3) et un élément coulissant (4),
le composant de palier (3) étant conçu comme un élément séparé du boîtier (5) et étant monté de manière fixe au boîtier (5),
l'élément de réglage (2) étant monté rotatif autour de son axe longitudinal (c) dans une zone de retenue (32) du composant de palier (3) et l'élément de réglage (2) présentant une section d'entraînement (25) reliée par engrenage à un dispositif d'entraînement (6) et une section de tige (22) avec un filetage (24) qui coopère avec un contre-filetage (42) de l'élément coulissant (4), l'élément coulissant (4) pouvant être relié de manière articulée à l'unité de construction optique (10) au niveau d'une zone de liaison (41),
le composant de palier (3), qui est séparé du boîtier (5), comprenant une zone de guidage (34) dans laquelle l'élément coulissant (4) est monté coulissante parallèlement à l'axe longitudinal (c) de l'élément de réglage,
**caractérisé en ce que**
le dispositif d'entraînement (6) est monté dans le boîtier (5), par exemple rotatif dans une ouverture (50) du boîtier, et la zone de retenue (32) comporte un dispositif d'encliquetage (36), sur lequel le dispositif d'entraînement (6) est encliqueté dans sa position de fonctionnement par rapport à l'élément de réglage (2).

2. Système de réglage selon la revendication 1, **caractérisé en ce que** l'élément de réglage (2) est disposé à l'extérieur de la zone de guidage (34) et **en ce que**, de préférence, seulement au moins une partie de guidage (43) de l'élément coulissant (4) est maintenue coulissante dans la zone de guidage (34).

3. Système de réglage selon la revendication 1 ou 2, **caractérisé en ce que** la zone de maintien (32) et la zone de guidage (34) du composant de palier (3) sont formées solidaire l'une avec l'autre.

4. Système de réglage selon l'une quelconque des revendications précédentes, **caractérisé en ce que** la section d'entraînement (25) est formée à une extrémité de l'élément de réglage (2), de préférence en tant que vis de réglage.

5. Système de réglage selon l'une quelconque des revendications précédentes, **caractérisé en ce que** la portion d'entraînement (25) comprend une roue dentée conique (21), le dispositif d'entraînement (6) étant réalisé en tant qu'un arbre de réglage comprenant un pignon conique (61) coopérant avec la roue dentée conique (21) et une partie de tête (60) sortant du boîtier (5).

6. Système de réglage selon la revendication 5, **caractérisé en ce que** la partie de tête (60) de l'arbre de réglage présente un appendice (63) pour un outil externe, l'appendice (63) étant de préférence conçu comme une butée de profondeur pour un outil externe et pénétrant dans la partie de tête (60) au milieu le long de l'axe longitudinal (b) de l'arbre de réglage (6).

7. Système de réglage selon l'une quelconque des revendications précédentes, **caractérisé en ce que** le dispositif de réglage, et en particulier l'élément de réglage (2), se trouve entièrement à l'intérieur du boîtier (5).

8. Système de réglage selon l'une quelconque des revendications précédentes, **caractérisé en ce que** le composant de palier (3) peut être fixé au boîtier (5) par des ouvertures (38) prévues dans la zone de retenue (32) au moyen de boulons ou de vis de fixation (35).

9. Système de réglage selon l'une quelconque des revendications précédentes, **caractérisé en ce que** l'élément coulissant (4) comporte deux parties de guidage (43, 43a), disposées en saillie par rapport au contre-filetage (42), et chacune de ces parties de guidage étant maintenue dans une partie correspondante de la zone de guidage (34).

10. Système de réglage selon la revendication 9, **caractérisé en ce que** les parties de guidage (43, 43a) sont disposées respectivement en saillie au-dessous et au-dessus du contre-filet (42).
